# EUROPÄISCHE PATENTSCHRIFT

(11) **EP 2 596 256 B1**
(45) Veröffentlichungstag und Bekanntmachung des Hinweises auf die Patenterteilung: **02.10.2019**
(21) Anmeldenummer: 11715488.0
(22) Anmeldetag: 14.04.2011
(51) Int. Cl.: F16C 9/00, F16C 33/14

(54) **GLEITFLÄCHENBEARBEITUNG EINER ELASTISCH VERFORMTEN GLEITLAGERSCHALE**
SLIDING SURFACE MACHINING OF AN ELASTICALLY DEFORMED SLIDING BEARING SHELL
USINAGE DE LA SURFACE DE GLISSEMENT D'UN COUSSINET DE PALIER LISSE ÉLASTIQUEMENT DÉFORMÉ

(30) Priorität: 21.07.2010 DE 102010031607
(43) Veröffentlichungstag der Anmeldung: 29.05.2013
(73) Patentinhaber: Federal-Mogul Wiesbaden GmbH, 65201 Wiesbaden (DE)
(72) Erfinder: ROßMANITH, Ralf, 65375 Oestrich-Winkel (DE); RITTMANN, Stefan, 67292 Kirchheimbolanden (DE); DOYLE, Steven, Blacksburg VA 24060 (US)
(74) Vertreter: Hoffmann Eitle
(86) Internationale Anmeldenummer: PCT/EP2011/055911
(87) Internationale Veröffentlichungsnummer: WO 2012/010335

(56) Entgegenhaltungen:
- DE-A1- 19 519 798
- DE-C- 640 449
- DE-C1- 19 606 992
- GB-A- 110 676
- US-A- 4 668 107

## Beschreibung

### TECHNISCHES GEBIET

Die Erfindung betrifft ein Verfahren und eine Bohraufnahme zum Ausbilden der Gleitfläche einer Lagerschale, wobei die Gleitfläche der Lagerschale einen Gleitflächenbereich und zwei Freilegungsbereiche, in denen die Lagerschale mit einer reduzierten Wanddicke vorgesehen ist, aufweist.

### STAND DER TECHNIK

Zur Ausbildung von Lagern aus zwei Lagerschalen werden die beiden Lagerschalen oder Lagerhälften an den jeweiligen Endflächen aufeinander gelegt und mittels Druck so in eine Lageraufnahme eingepasst, dass ein hohlzylindrisches Lager mit einer innen liegenden Gleitfläche ausgebildet wird. Dabei können geringfügige Ungenauigkeiten an den Verbindungsstellen der beiden Lagerschalen dazu führen, dass die Innenkante einer Teilfläche an einer Verbindungsstelle nach innen hervorsteht. Dadurch wird die Welle behindert, was zu einem erhöhten Verschleiß und verschlechterten Laufeigenschaften der Welle führen kann. Eine weitere Ursache dafür, dass Teile der Lagerschalen in den Verbindungsbereichen nach innen hervorstehen oder sich nach innen wölben, liegt in der Presspassung der Lagerschalen.

Um dies zu verhindern, besitzen die Lagerschalen eine sogenannte Freilegung an ihren Lagerschalenenden, worunter man einen Bereich an den Lagerschalenenden versteht, in dem die Wandstärke der Lagerschale reduziert ist.

Die DE 10 2005 037 502 A1 beschreibt eine Lagerschale mit einem ersten und einem zweiten Freilegungsbereich und einem Gleitflächenbereich zwischen den beiden Freilegungsbereichen. In der DE 101 63 292 A1 werden solche Freilegungsbereiche als Quetsch-Entlastungsflächen bezeichnet.

Die Gleitflächenbearbeitung von Gleitlagerschalen erfolgt heute durch ein sogenanntes Ausbohren der Lagerschalen. Hierbei bewegt sich die Bohrspindel mit einer Drehzahl X [U/min] in radialer Richtung und einem Vorschub Y [mm/U] in axialer Richtung. Dieses Ausbohren erfolgt mit einer Bohrspindel, in deren Spindelkopf zwei, um 180° gegenüberliegende Schneidpatronen eingesetzt sind.

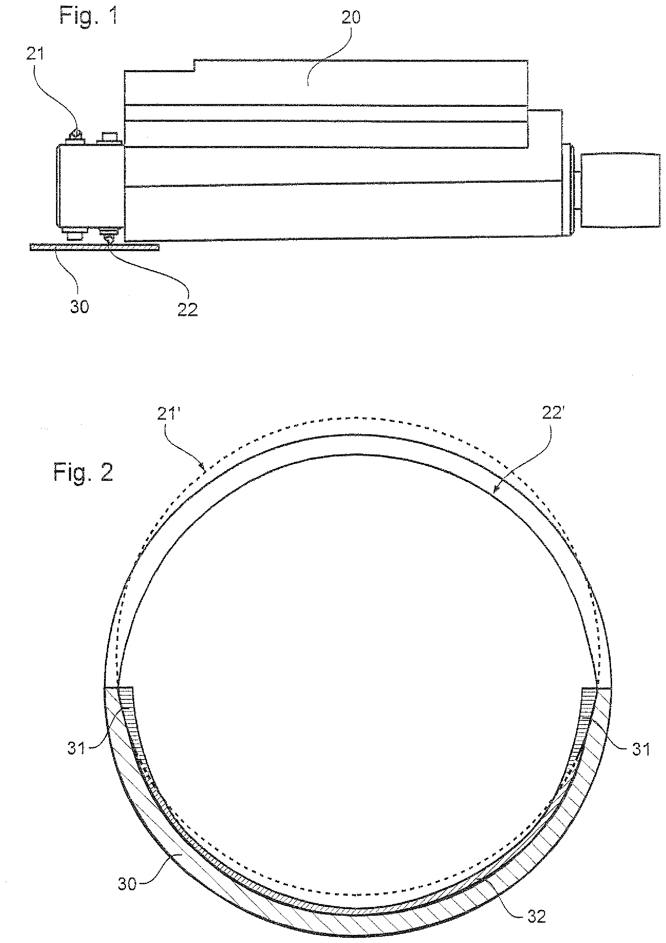

Eine solche Bohrspindel ist in Fig. 1 gezeigt. Die Bohrspindel 20 weist eine erste Schneidpatrone 21 zum Ausbilden der Freilegungsbereiche und eine zweite Schneidpatrone 22 zum Schneiden der Lagerschale 30 auf eine gewisse Wanddicke auf. Die Freilegungsbereiche der Lagerschale 30 sind in Fig. 2 mit dem Referenzzeichen 31 bezeichnet. Es ist zu erkennen, dass die Freilegungsbereiche 31 an den beiden Enden der Lagerschale vorgesehen sind und eine reduzierte Wanddicke aufweisen. Die Freilegungsbereiche 31 gehen in einen dazwischen liegenden Gleitflächenbereich 32 über.

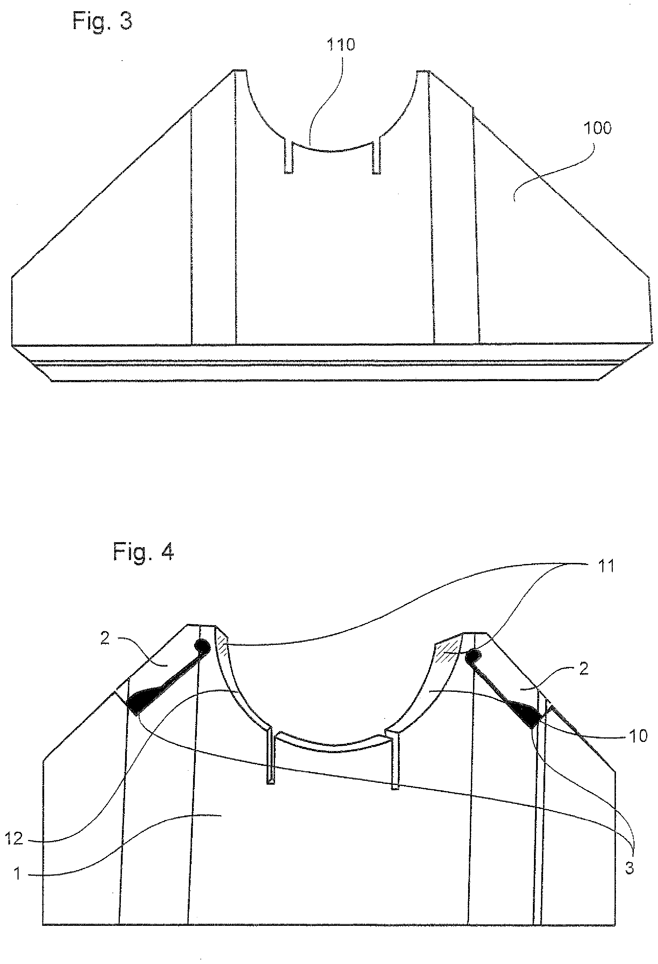

In Fig. 3 ist eine herkömmliche Bohraufnahme 100 mit einem zylindrischen Aufnahmebereich 110 zur Aufnahme einer Lagerhälfte gezeigt. Bei der Gleitflächenbearbeitung werden in einem Bohrhub von der zweiten Schneidpatrone 22 die eigentliche Gleitfläche, der Gleitflächenbereich 32, und von der ersten Schneidpatrone 21 die beiden Freilegungsbereiche 31 erzeugt. Hierzu müssen die von den beiden Schneiden beschriebenen Schneidkreise einen unterschiedlich großen Durchmesser realisieren. Die unterschiedlich großen Schneidkreise 21' und 22' und die Lage der Schneidkreise 21' und 22' im Querschnitt der Lagerschale senkrecht zur Lagerachse sind in Fig. 2 gezeigt. In vertikaler Richtung gesehen, werden die unterschiedlichen Schneidkreise 21' und 22' erzielt, indem die Achse der Bohrspindel in einem bestimmten Winkel, dem Einstellwinkel, zur Achse der zu bearbeitenden Lagerschale angeordnet wird. Die Größe des Winkels zwischen den beiden Achsen und der Durchmesser der Schneidkreise 21' und 22' ist abhängig von den zu erzeugenden Maßen der Freilegungsbereiche 31.

Durch den axialen Versatz der beiden Schneidpatronen 21 und 22 auf dem Bohrspindelkopf ergibt sich zwangsweise die Situation, dass die von der ersten Schneidpatrone bearbeitete Fläche im weiteren Bearbeitungsprozess von der zweiten Schneidpatrone (berührungslos wegen Einstellwinkel) überfahren wird.

Bei diesem Verfahren resultieren Probleme aus den von der zweiten Schneidpatrone 22 erzeugten Spänen. Diese Späne überfahren, hervorgehend aus ihrer durch den Prozess hervorgerufenen hohen Fliehkraft, jedoch nicht berührungslos, ebenfalls die von der ersten Schneidpatrone 21 bereits bearbeitete Fläche. Hierdurch entstehen Fehlstellen in Form von Kratzern und, durch die im Bearbeitungsprozess entstehenden hohen Bearbeitungstemperaturen, fest an der gesamten Gleitfläche angeschweißte Späne.

Bei der Gleitflächenbearbeitung im Stand der Technik (Gleitflächenbereich und Freilegungsbereiche) von Gleitlagerschalen entstehen daher, speziell bei der Bearbeitung bleifreier Werkstoffe, gravierende Fehlstellen. Diese Fehlstellen zeigen sich in Form von Kratzern und von fest an der gesamten Gleitfläche angeschweißten Spänen. Besonders betroffen von Kratzern ist der Freilegungsbereich an der Spindel-Auslaufseite. Die angeschweißten Späne befinden sich vorwiegend in dem eigentlichen Gleitflächenbereich.

Die JP 5-23902 A beschreibt ein Verfahren und eine Vorrichtung zum Ausbohren einer Innenfläche einer Lagerhälfte. Die Vorrichtung weist einen Block mit einer Umfangsfläche auf, in die eine Lagerhälfte eingelegt wird. Ein Schraubmechanismus ist vorgesehen, um untere Endabschnitte des Blocks, die sich an den Enden der Lagerschale befinden, zu verformen. Die unteren Endabschnitte sind einstückig mit dem Block ausgebildet.

### ZUSAMMENFASSUNG DER ERFINDUNG

Eine-Aufgabe der vorliegenden Erfindung besteht darin, die Qualität der Gleitflächen, bestehend aus Gleitflächenbereich und Freilegungsbereichen, zu verbessern.

Die Aufgabe wird mit einer Vorrichtung gemäß dem Anspruch 1 und einem Verfahren nach Anspruch 5 gelöst.

Das erfindungsgemäße Verfahren zur Herstellung einer Lagerschale, auch Lagerhälfte genannt, mit einem ersten und einem zweiten Freilegungsbereich ist dadurch gekennzeichnet, dass das Ausbohren an einer elastisch verformten Lagerschale erfolgt. Die Lagerschale weist einen ersten und einen zweiten Freilegungsbereich an den jeweiligen Enden der Lagerschale auf. Die Freilegungsbereiche zeichnen sich dadurch aus, dass sie gegenüber dem Gleitflächenbereich der Lagerschale eine reduzierte Wanddicke aufweisen. Der Gleitflächenbereich ist zwischen den beiden Freilegungsbereichen vorgesehen. Sowohl die Freilegungsbereiche als auch der Gleitflächenbereich werden auf der Innenfläche der Lagerschale ausgebildet bzw. bearbeitet. Mit einer während der Ausbohrung elastisch verformten Lagerschale lässt sich eine entlang der Lagerschale variierende Wanddicke ausbilden. Zur Ausbildung der Freilegungsbereiche werden die Bereiche der Lagerschale, in denen die Freilegungsbereiche auszubilden sind, unmittelbar vor dem Ausbohren bezüglich einer kreisförmigen Kontur radial nach innen versetzt. Auf diese Weise wird an den Endbereichen der Lagerschale mehr Material abgetragen als am Gleitflächenbereich. Das erfindungsgemäße Verfahren reduziert nicht nur die Anzahl und Ausprägung von Fehlstellen sondern vereinfacht die Gleitflächenbearbeitung erheblich, da die Bearbeitung des Gleitflächenbereichs und der Freilegungsbereiche gleichzeitig und mit nur einem Schneidwerkzeug erfolgen kann. Ferner erzeugt das erfindungsgemäße Verfahren einen sanften Übergang des Gleitflächenbereichs zu den Freilegungsbereichen, wodurch im Falle eines Anlaufens der Welle an dem Gleitflächenbereich eine linienförmige Berührung entschärft wird.

Das Ausbohren erfolgt an einer Vorrichtung, welche einen Aufnahmebereich mit einer Mantelfläche aufweist, welche die Lagerschale in einem elastisch verformten Zustand aufnimmt, so dass der Querschnitt senkrecht zur Lagerachse der aufgenommenen, jedoch noch nicht ausgebohrten Lagerschale von einer kreisförmigen Kontur radial abweicht, wobei die Endabschnitte der Lagerschale, an denen die Freilegungsbereiche auszubilden sind, unmittelbar vor dem Ausbohren bezüglich einer kreisförmigen Kontur radial nach innen versetzt sind. Hierbei sind an den Enden der Mantelfläche verstellbare Einstellbacken vorgesehen, die unabhängig von den festen Mantelflächenbereichen einstellbar sind, die eine elastische Verformung der Lagerschale in den Freilegungsbereichen bewirken.

Vorzugsweise wird die Lagerschale vor dem Ausbohren in einen Aufnahmebereich einer Bohraufnahme eingelegt, dessen Querschnitt senkrecht zur Lagerachse von einer kreisförmigen Kontur radial abweicht. Somit lässt sich die Lagerschale radial auf die gewünschte Weise elastisch verformen und eine hohe Reproduzierbarkeit der Gleitflächenbearbeitung erzielen. Vorzugsweise erfolgen die Ausbildung bzw. Bearbeitung der Freilegungsbereiche und die Ausbildung bzw. Bearbeitung des Gleitflächenbereichs mit genau einem Schneidwerkzeug (Schneidpatrone), wodurch nicht nur eine Vereinfachung der Herstellung der Lagerschale erzielt wird, sondern die Freilegungsbereiche und der Gleitflächenbereich gleichzeitig bearbeitet werden können. Somit kommt ein Schneidwerkzeug zu keinem Zeitpunkt an einer vorher bereits fertig bearbeiteten Fläche vorüber. Ein Überfahren der im Bearbeitungsprozess erzeugten Späne über eine vorher bereits fertig bearbeitete Fläche kommt somit nicht vor, wodurch die Qualität der Gleitfläche der Lagerschale verbessert wird und die Bearbeitung vereinfacht und zeitlich verkürzt wird.

Eine geeignete Bohraufnahme zur Ausführung des obigen Verfahrens nimmt die zu bearbeitende Lagerschale in einem elastisch verformten Zustand auf, so dass der Querschnitt senkrecht zur Lagerachse der aufgenommenen, jedoch noch nicht ausgebohrten Lagerschale von einer kreisförmigen Kontur radial abweicht. Hierbei sind die Endabschnitte der Lagerschale, wo die Freilegungsbereiche auszubilden sind, unmittelbar vor dem Ausbohren bezüglich einer kreisförmigen Kontur radial nach innen versetzt.

Vorzugsweise weist die Vorrichtung eine Mantelfläche auf, die zumindest teilweise mit der aufgenommenen Lagerschale in flächigem Kontakt steht, wobei die Querschnittskontur der Mantelfläche senkrecht zur Lagerachse von einer kreisförmigen Kontur radial abweicht. Auf diese Weise wird die Lagerschale sicher und bezüglich der Lage reproduzierbar gehalten, wodurch eine hohe Genauigkeit und Reproduzierbarkeit der Gleitflächenbearbeitung erzielt wird. Die Mantelfläche kann unterbrochen sein oder Diskontinuitäten, auch in radialer Richtung, aufweisen. Die Mantelfläche kann zumindest teilweise eine zylindrische oder halbzylindrische Form aufweisen.

Vorzugsweise weist die Bohraufnahme Mittel zum Verstellen der Querschnittskontur senkrecht zur Lagerachse einer eingelegten Lagerschale auf, um die Form und Wanddicke der Freilegungsbereiche relativ zum Gleitflächenbereich einzustellen.

Vorzugsweise ist die Querschnittskontur der Mantelfläche senkrecht zur Lagerachse in radialer Richtung verstellbar, um eine einfache, sichere und reproduzierbare Einstellung des Verformungsgrads der Lagerschale zu gewährleisten. Die Einstellung kann hierbei so erfolgen, dass ein kontinuierlicher Verlauf im Übergangsbereich des einstellbaren Mantelflächenabschnitts und des fixierten Mantelflächenabschnitts beibehalten wird. Dadurch wird eine zumindest im Übergangsbereich flächige Auflage der Lagerschale auch bei Integration der Verstellbarkeitsfunktion beibehalten. Andererseits lässt sich die Verstellbarkeit beispielsweise über Einstellbacken erreichen, die einen Teil der Mantelfläche ausmachen, wodurch eine verschleißorientierte Optimierung erzielt werden kann. Erfindungsgemäß sind die Einstellbacken an den Enden der Mantelfläche, die den Freilegungsbereichen einer eingelegten Lagerschale entsprechen, vorgesehen. Die Einstellbacken stehen mit einer eingelegten Lagerschale in Kontakt und sind unabhängig von festen bzw. fixierten Mantelflächenbereichen einstellbar. Durch die Verstellung solcher Einstellbacken kann ein diskontinuierlicher Verlauf in radialer Richtung der Mantelfläche gebildet entstehen.

### KURZE BESCHREIBUNG DER ZEICHNUNGEN

Fig. 1 zeigt eine Bohrspindel mit zwei Schneidwerkzeugen zur Bearbeitung von Freilegungsbereichen und eines Gleitbereichs.
Fig. 2 zeigt die Wirkung eines herkömmlichen Verfahrens an einem Querschnitt der Lagerschale.
Fig. 3 zeigt den Querschnitt einer bekannten Bohraufnahme mit einem halbkreisförmigen Aufnahmebereich.
Fig. 4 zeigt eine Bohraufnahme, deren Querschnittskontur verstellbar ist, die aber nicht Teil der Erfindung ist.
Fig. 5 zeigt eine erfindungsgemäße Bohraufnahme mit verstellbarer Querschnittskontur.

### WEGE ZUR AUSFÜHRUNG DER ERFINDUNG

In einer bevorzugten Ausführungsform werden die oben beschriebenen Fehlstellen im Stand der Technik vermieden, indem die Bearbeitung der eigentlichen Gleitfläche und der beiden. Freilegungsbereiche mit nur einer Schneidpatrone durchgeführt wird. Dazu ist eine Bohrspindel mit nur einem Schneidwerkzeug oder eine Bohrspindel mit mehreren Schneidwerkzeugen in im Wesentlichen derselben axialen Ebene geeignet. Es kann aber auch eine Bohrspindel, wie sie in Fig. 1 gezeigt ist, aus dem Stand der Technik mit einem Schneidwerkzeug für die Freilegungsbereiche und einem Schneidwerkzeug für den Gleitflächenbereich verwendet werden, indem beispielsweise eines der beiden Schneidwerkzeuge zwar eingebaut ist, um eine Unwucht zu vermeiden, am Schnittvorgang aber nicht beteiligt ist.

Zur Bearbeitung der Gleitfläche wird eine Lagerhälfte bzw. Lagerschale in eine Bohraufnahme eingesetzt. Eine Bohraufnahme, die nicht Teil der Erfindung, aber zum Verständnis derselben geeignet ist, ist in der Fig. 4 gezeigt. Die Bohraufnahme 1 weist eine halbzylindrische Mantelfläche 10 auf, die zur Anlage an einer Lagerschale dient. Die Mantelfläche 10 weist an den beiden oberen Enden zwei Bereiche 11 zur Ausbildung der Freilegungsbereiche und einen dazwischen befindlichen Bereich 12, der dem Gleitflächenbereich einer eingelegten Lagerschale entspricht, auf. Die oberen Bereiche 11 sind mittels in der Vorrichtung 1 eingesetzter Stifte 3 so verstellbar, dass die Querschnittskontur der Mantelfläche 10 senkrecht zur Lagerachse verstellbar ist. Dazu weist die Bohraufnahme 1 zwei durch die Stifte 3 verformbare Verformungsbereiche 2 auf. Auf diese Weise lassen sich die oberen Bereiche 11 so nach innen kippen, dass eine eingelegte Lagerschale elastisch verformt wird. Trotz Verstellbarkeit ist der Übergang der Mantelfläche von den oberen Bereichen 11 in den mittleren Bereich 12, der nicht oder nur wenig verstellbar ist, kontinuierlich. Die oben angesprochene Kontur ist im verstellten Zustand nicht kreisförmig. Ein kreisförmiges Ausbohren einer eingelegten und durch die Bohraufnahme elastisch verformten Lagerschale bewirkt eine Reduzierung der Wandstärke der Lagerschale an den Freilegungsbereichen, verglichen mit dem Gleitflächenbereich. Das Verfahren erzeugt einen sanften Übergang des Gleitflächenbereichs zu den Freilegungsbereichen, wodurch im Falle eines Anlaufens der Welle an dem Gleitflächenbereich eine linienförmige Berührung entschärft wird.

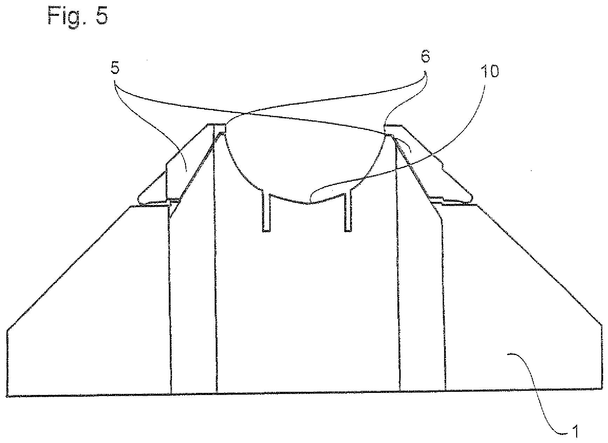

Eine verschleißoptimierte Bohraufnahme ist in Fig. 5 gezeigt, in der in die Bohraufnahme eingesetzte Verschleißstücke oder Einstellbacken 5 eine elastische Verformung der Lagerschale in den Freilegungsbereichen bewirken. Dazu weisen die verstellbaren Verschleißstücke 5 Backen 6 zur elastischen Verformung der Lagerschale auf.

## Patentansprüche

1. Vorrichtung zur Aufnahme einer auszubohrenden Lagerschale (30), wobei die Vorrichtung (1) einen Aufnahmebereich mit einer Mantelfläche (10) aufweist, welche die Lagerschale (30) in einem elastisch verformten Zustand aufnimmt, so dass der Querschnitt senkrecht zur Lagerachse der aufgenommenen, jedoch noch nicht ausgebohrten Lagerschale von einer kreisförmigen Kontur radial abweicht, wobei
die Endabschnitte der Lagerschale (30), an denen die Freilegungsbereiche (31) auszubilden sind, unmittelbar vor dem Ausbohren bezüglich einer kreisförmigen Kontur radial nach innen versetzt sind, wobei
an den Enden der Mantelfläche (10) verstellbare Einstellbacken (5) vorgesehen sind, die unabhängig von den festen Mantelflächenbereichen einstellbar sind, die eine elastische Verformung der Lagerschale in den Freilegungsbereichen (31) bewirken.

2. Vorrichtung nach Anspruch 1, **dadurch gekennzeichnet, dass** die Mantelfläche (10) zumindest teilweise mit der aufgenommenen Lagerschale (30) in flächigem Kontakt steht, wobei die Querschnittskontur der Mantelfläche (10) senkrecht zur Lagerachse von einer kreisförmigen Kontur radial abweicht.

3. Vorrichtung nach Anspruch 1 oder 2, **dadurch gekennzeichnet, dass** die Vorrichtung Mittel zum Verstellen der Querschnittskontur senkrecht zur Lagerachse einer eingelegten Lagerschale (30) aufweist.

4. Vorrichtung nach Anspruch 2 und 3, **dadurch gekennzeichnet, dass** die Querschnittskontur der Mantelfläche (10) senkrecht zur Lagerachse in radialer Richtung verstellbar ist.

5. Verfahren zur Herstellung einer Lagerschale (30) mit einem ersten und einem zweiten Freilegungsbereich (31), in denen die Lagerschale (30) eine reduzierte Wanddicke aufweist, wobei
die beiden Freilegungsbereiche (31) auf der Innenfläche der Lagerschale (30) an beiden Endabschnitten der Lagerschale (30) und ein Gleitflächenbereich (32) zwischen den beiden Freilegungsbereichen (31) auf der Innenfläche der Lagerschale (30) bearbeitet werden, und
der Gleitflächenbereich (32) und die Freilegungsbereiche (31) durch Ausbohren der Lagerschale (30) bearbeitet werden, wobei
das Ausbohren an einer elastisch verformten Lagerschale (30) erfolgt und die Endabschnitte der Lagerschale (30), an denen die Freilegungsbereiche (30) auszubilden sind, unmittelbar vor dem Ausbohren bezüglich einer kreisförmigen Kontur radial nach innen versetzt sind, und
das Ausbohren an einer Vorrichtung gemäß einem der Ansprüche 1 bis 4 erfolgt.

6. Verfahren nach Anspruch 5, **dadurch gekennzeichnet, dass** die Lagerschale (30) vor dem Ausbohren in einen Aufnahmebereich der Vorrichtung eingelegt wird, dessen Querschnitt senkrecht zur Lagerachse von einer kreisförmigen Kontur radial abweicht.

7. Verfahren nach Anspruch 5 oder 6, **dadurch gekennzeichnet, dass** die Bearbeitung der Freilegungsbereiche (31) und des Gleitbereichs (32) mit genau einem Schneidwerkzeug erfolgen.

8. Verfahren nach einem der Ansprüche 5 bis 7, **dadurch gekennzeichnet, dass** die Bearbeitung der Freilegungsbereiche (31) und des Gleitbereichs (32) gleichzeitig erfolgt.

## Claims

1. Jig to receive a bearing shell (30) to be bored out, the jig (1) having a receiving region which has a part-circumferential surface (10) which receives the bearing shell (30) in an elastically deformed state, so that the cross-section of the bearing shell, seen perpendicularly to the future axis in a bearing of the received but as yet not bored-out bearing shell, deviates radially from a circular outline,
wherein the end portions of the bearing shell (30), at which the relief regions (31) are to be formed, are displaced inwards radially from a circular outline immediately before the boring-out, and
wherein there are provided at the ends of the part-circumferential surface (10) adjustable jaws for setting purposes (5) which can be set independently of the fixed regions of the part-circumferential surface and which cause an elastic deformation of the bearing shell in the relief regions (31).

2. Jig according to claim 1, **characterised in that** the part-circumferential surface (10) is at least partly in contact with the received bearing shell (30) over an area, with the outline of the part-circumferential surface (10) in cross-section, seen perpendicularly to the axis in a bearing, deviating radially from a circular outline.

3. Jig according to claim 1 or 2, **characterised in that** the jig has means for adjusting the outline in cross-section of an inserted bearing shell (30), seen perpendicularly to the future axis of the latter in a bearing.

4. Jig according to claims 2 and 3, **characterised in that** the outline in cross-section of the part-circumferential surface (10), seen perpendicularly to the axis in a bearing, is adjustable in a radial direction.

5. Method of producing a bearing shell (30) having a first and a second relief region (31) in which the bearing shell (30) is of a reduced wall-thickness, wherein
the two relief regions (31) are machined on the inside face of the bearing shell (30) at the two end-portions of the bearing shell (30) and a sliding-face region (32) is machined on the inside face of the bearing shell (30) between the two relief regions (31), and
the sliding-face region (32) and the relief regions (31) are machined by boring out the bearing shell (30),
the boring-out being performed on an elastically deformed bearing shell (30) and the end-portions of the bearing shell (30), at which the relief regions (30) are to be formed, being displaced inwards radially from a circular outline immediately before the boring-out, and
the boring-out being performed on a jig according to one of claims 1 to 4.

6. Method according to claim 5, **characterised in that**, before the boring-out, the bearing shell (30) is inserted in a receiving region of the jig whose cross-section, seen perpendicularly to the future axis of the bearing shell in a bearing, deviates radially from a circular outline.

7. Method according to claim 5 or 6, **characterised in that** the machining of the relief regions (31) and the machining of the sliding region (32) are performed with precisely one cutting tool.

8. Method according to one of claims 5 to 7, **characterised in that** the machining of the relief regions (31) and the machining of the sliding region (32) are performed simultaneously.

## Revendications

1. Dispositif de logement d'un coussinet de palier (30) à aléser, dans lequel le dispositif (1) présente une zone de logement avec une surface d'enveloppe (10), laquelle loge le coussinet de palier (30) dans un état déformé élastiquement, de sorte que la section transversale perpendiculairement à l'axe de palier du coussinet de palier logé, mais pas encore alésé, s'écarte radialement d'un contour circulaire, dans lequel
les parties d'extrémité du coussinet de palier (30), sur lesquelles les zones exposées (31) doivent être formées, sont, juste avant l'alésage, décalées radialement vers l'intérieur par rapport à un contour circulaire, dans lequel
des mâchoires réglables (5) déplaçables, qui peuvent être réglées indépendamment des zones de surface d'enveloppe fixes qui provoquent une déformation élastique du coussinet de palier dans les zones exposées (31), sont prévues aux extrémités de la surface d'enveloppe (10).

2. Dispositif selon la revendication 1, **caractérisé en ce que** la surface d'enveloppe (10) est en contact plat au moins en partie avec le coussinet de palier (30) logé, dans lequel le contour de section transversale de la surface d'enveloppe (10) perpendiculairement à l'axe de palier s'écarte radialement d'un contour circulaire.

3. Dispositif selon la revendication 1 ou 2, **caractérisé en ce que** le dispositif présente des moyens destinés à déplacer le contour de section transversale perpendiculairement à l'axe de palier d'un coussinet de palier (30) inséré.

4. Dispositif selon la revendication 2 et 3, **caractérisé en ce que** le contour de section transversale de la surface d'enveloppe (10) peut être déplacé dans la direction radiale perpendiculairement à l'axe de palier.

5. Procédé de fabrication d'un coussinet de palier (30) avec une première et une deuxième zone exposée (31), dans lesquelles le coussinet de palier (30) présente une épaisseur de paroi réduite, dans lequel
les deux zones exposées (31) sur la surface intérieure du coussinet de palier (30) sur les deux parties d'extrémité du coussinet de palier (30) et une zone de surface de glissement (32) entre les deux zones exposées (31) sur la surface intérieure du coussinet de palier (30) sont usinées, et
la zone de surface de glissement (32) et les zones exposées (31) sont usinées par alésage du coussinet de palier (30), dans lequel
l'alésage s'effectue sur un coussinet de palier (30) déformé élastiquement et les parties d'extrémité du coussinet de palier (30), sur lesquelles les zones exposées (30) doivent être formées, sont, juste avant l'alésage, décalées radialement vers l'intérieur par rapport à un contour circulaire, et
l'alésage s'effectue sur un dispositif selon l'une quelconque des revendications 1 à 4.

6. Procédé selon la revendication 5, **caractérisé en ce que** le coussinet de palier (30), avant l'alésage, est inséré dans une zone de logement du dispositif dont la section transversale perpendiculairement à l'axe de palier s'écarte radialement d'un contour circulaire.

7. Procédé selon la revendication 5 ou 6, **caractérisé en ce que** l'usinage des zones exposées (31) et de la zone de glissement (32) s'effectue avec un seul outil de coupe.

8. Procédé selon l'une quelconque des revendications 5 à 7, **caractérisé en ce que** l'usinage des zones exposées (31) et de la zone de glissement (32) s'effectue simultanément.
